# FASCICULE DE BREVET EUROPEEN

(11) **EP 2 533 987 B1**
(45) Date de publication et mention de la délivrance du brevet: **29.04.2015**
(21) Numéro de dépôt: 11702215.2
(22) Date de dépôt: 04.02.2011
(51) Int. Cl.: B60C 11/12

(54) **PNEUMATIQUE POUR VEHICULES A DEUX ROUES COMPORTANT UNE BANDE DE ROULEMENT PRESENTANT DES INCISIONS**
REIFEN FÜR ZWEIRÄDRIGE FAHRZEUGE EINSCHLIESSLICH EINEM PROFIL MIT LAMELLEN
TIRE FOR TWO-WHEELED VEHICLES, INCLUDING A TREAD HAVING SIPES

(30) Priorité: 12.02.2010 FR 1050993
(43) Date de publication de la demande: 19.12.2012
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: BESTGEN, Luc, F-63140 Chatel-Guyon (FR)
(74) Mandataire: Le Cam, Stéphane Georges Elie
(86) Numéro de dépôt international: PCT/EP2011/051638
(87) Numéro de publication internationale: WO 2011/098406

(56) Documents cités:
- EP-A1- 0 561 326
- WO-A1-2004/018236
- WO-A1-2008/149611
- FR-A1- 2 548 097
- US-A- 3 556 190
- US-A- 4 723 584

## Description

L'invention concerne un pneumatique destiné à équiper un véhicule et plus particulièrement destiné à équiper un véhicule à deux roues tel qu'une motocyclette et plus spécifiquement encore un pneumatique destiné à équiper une motocyclette d'indice de vitesse supérieur à W qui correspond à une vitesse 270 km/h.

Bien que non limité à une telle application, l'invention sera plus particulièrement décrite en référence à un tel pneumatique de motocyclette, ou moto.

Comme dans le cas de tous les autres pneumatiques, on assiste à une radialisation des pneumatiques pour motos, l'architecture de tels pneumatiques comprenant une armature de carcasse formée d'une ou deux couches d'éléments de renforcement faisant avec la direction circonférentielle un angle pouvant être compris entre 65° et 90°, ladite armature de carcasse étant radialement surmontée d'une armature de sommet formée d'éléments de renforcement. Il subsiste toutefois des pneumatiques non radiaux auquel se rapporte également l'invention. L'invention se rapporte encore à des pneumatiques partiellement radiaux, c'est-à-dire dont les éléments de renforcement de l'armature de carcasse sont radiaux sur au moins une partie de ladite armature de carcasse, par exemple dans la partie correspondant au sommet du pneumatique.

De nombreuses architectures d'armature de sommet ont été proposées, selon que le pneumatique sera destiné à la monte à l'avant de la moto ou à la monte à l'arrière. Une première structure consiste, pour ladite armature de sommet, à employer uniquement des câbles circonférentiels, et ladite structure est plus particulièrement employée pour la position arrière. Une deuxième structure, directement inspirée des structures couramment employées en pneumatiques pour véhicules de Tourisme, a été utilisée pour améliorer la résistance à l'usure, et consiste dans l'utilisation d'au moins deux couches de sommet de travail d'éléments de renforcement sensiblement parallèles entre eux dans chaque couche mais croisés d'une couche à la suivante en faisant avec la direction circonférentielle des angles aigus, de tels pneumatiques étant plus particulièrement adaptés pour l'avant des motos. Les dites deux couches de sommet de travail peuvent être associées à au moins une couche d'éléments circonférentiels, généralement obtenus par enroulement hélicoïdal d'une bandelette d'au moins un élément de renforcement enrobé de caoutchouc.

Le choix des architectures de sommet des pneumatiques intervient directement sur certaines propriétés des pneumatiques telles que l'usure, l'endurance, l'adhérence ou bien encore le confort en roulage ou dans les cas notamment des motocyclettes la stabilité. Toutefois d'autres paramètres des pneumatiques tels que la nature des mélanges caoutchouteux constituant la bande de roulement interviennent également sur les propriétés dudit pneumatique. Le choix et la nature des mélanges caoutchouteux constituant la bande de roulement sont par exemple des paramètres essentiels concernant les propriétés d'usure. Le choix et la nature des mélanges caoutchouteux constituant la bande de roulement interviennent également sur les propriétés d'adhérence du pneumatique.

Il est encore connu pour d'autres types de pneumatiques de réaliser des bandes de roulement comportant des incisions plus particulièrement pour des pneumatiques destinés à rouler sur des sols enneigés, verglacés, ou mouillés.

De telles bandes de roulement sont habituellement pourvue d'éléments en reliefs de type nervures ou blocs, séparés les uns des autres dans le sens circonférentiel et/ou dans le sens transversal par des rainures transversales et/ou circonférentielles. Ces bandes de roulement comportent alors en outre des incisions ou fentes, dont les largeurs non nulles sont très inférieures à celles des rainures précédemment citées. En réalisant une pluralité de découpes débouchant sur la surface de roulement, on crée une pluralité d'arêtes de gomme pour couper la couche d'eau éventuellement présente sur la route, de manière à maintenir le pneumatique en contact avec le sol et à créer des cavités formant éventuellement des conduits destinés à recueillir et à évacuer l'eau présente dans la zone de contact du pneumatique avec la route dès lors qu'elles sont disposées de façon à déboucher en dehors de la zone de contact.

De nombreux types d'incisions ont déjà été proposés en vue d'améliorer l'adhérence du pneumatique sur les sols considérés.

Le document FR 2 418 719 décrit par exemple des incisions qui peuvent être normales à la surface de la bande de roulement ou inclinées par rapport à la direction perpendiculaire à ladite surface.

Le document FR 791 250 décrit des incisions présentant un tracé ondulé sur la surface de la bande de roulement.

Les performances des motocyclettes notamment en adhérence sur route mouillée ont conduit à proposer des pneumatiques avec des bandes de roulement comportant des incisions en vue de contribuer à améliorer les passages de couples moteur ou freineur et ainsi améliorer les capacités d'accélération ou de freinage des motocyclettes.

Les essais réalisés avec des pneumatiques comportant des incisions réalisés dans les blocs de matériaux caoutchouteux, c'est-à-dire entre les différentes rainures présentes sur la bande de roulement conduisent à des améliorations en adhérence mais, comparés aux résultats obtenus sur des pneumatiques par exemple destinés à l'équipement d'automobile, l'amélioration en termes d'adhérence sur sol mouillé est moins importante.

Des pneumatiques connus sont décrits dans les documents FR 2548097, US 4723584 et EP 0561326.

L'invention a ainsi pour but de fournir un pneumatique pour motocyclette dont les propriétés en terme d'adhérence sur sol mouillé sont encore améliorées.

Ce but a été atteint selon l'invention par un pneumatique pour véhicule motorisé à deux roues comportant une structure de renfort de type carcasse, formée d'éléments de renforcement, ancrée de chaque côté du pneumatique à un bourrelet dont la base est destinée à être montée sur un siège de jante, chaque bourrelet se prolongeant radialement vers l'extérieur par un flanc, les flancs rejoignant radialement vers l'extérieur une bande de roulement, la longueur des incisions étant inférieure à 1.2 fois la largeur de la surface de l'aire de contact et au moins une incision présentant au moins une extrémité qui aboutit dans une découpe de la bande de roulement dont la largeur est supérieure à 2.5 mm et la longueur comprise entre 2.5 et 10 mm.

Au sens de l'invention, une incision est une découpe formant deux parois et dont la distance entre les parois mesurée selon la normale à un plan tangent à l'une des parois est inférieure à 1.5 mm et de préférence inférieure à 1 mm. Ladite distance au niveau de la surface de la bande de roulement est au moins égale à ladite distance au niveau du fond de l'incision, c'est-à-dire le niveau le plus éloigné de la surface de la bande de roulement. Dans le cas notamment d'un pneumatique pour motocyclette, l'épaisseur de la bande de roulement étant relativement peu importante, un élargissement de ladite distance depuis la surface de la bande de roulement vers le fond de l'incision ne peut exister au risque de provoquer un affaissement des bords de l'incision au niveau de la surface de la bande de roulement et ainsi conduire à une diminution de la surface de l'aire de contact avec le sol.

La longueur d'une incision est mesurée selon l'abscisse curviligne d'une paroi de ladite incision.

La surface de l'aire de contact est mesurée en écrasant verticalement selon une direction perpendiculaire à l'axe de rotation du pneumatique (c'est-à-dire que l'écrasement est réalisé verticalement, la roue étant dans un plan vertical), le pneumatique monté sur la jante nominale préconisée par l'ETRTO, gonflé à 2.5 bars sur une plaque non lubrifiée avec une charge correspondant à 60 % de la charge maximale préconisée du pneumatique (Load index). La largeur de la surface de la bande de roulement de l'aire de contact est donnée par la plus grande distance selon la direction axiale, la longueur étant donnée par la plus grande distance selon la direction circonférentielle.

Au sens de l'invention, la largeur de ladite découpe est égale à la largeur du rectangle circonscrit à ladite découpe, c'est-à-dire du plus petit rectangle contenant ladite découpe en entier.

Au sens de l'invention, une extrémité qui aboutit dans une découpe de la bande de roulement dont la largeur est supérieure à 2.5 mm est considérée comme ouverte c'est-à-dire une extrémité dont la largeur entre les extrémités des parois ne correspond pas à une masse caoutchouteuse.

Avantageusement selon l'invention, au moins 25 %, et de préférence au moins 50 %, des extrémités des incisions aboutissent dans une découpe de la bande de roulement dont la largeur est supérieure à 2.5 mm.

Avantageusement encore selon l'invention, au moins 25 % des extrémités des incisions aboutissent dans une découpe de la bande de roulement dont la largeur est supérieure à 2.5 mm et la longueur comprise entre 2.5 et 10 mm.

La direction longitudinale du pneumatique, ou direction circonférentielle, est la direction correspondant à la périphérie du pneumatique et définie par la direction de roulement du pneumatique.

La direction transversale ou axiale du pneumatique est parallèle à l'axe de rotation du pneumatique.

L'axe de rotation du pneumatique est l'axe autour duquel il tourne en utilisation normale.

Un plan circonférentiel ou plan circonférentiel de coupe est un plan perpendiculaire à l'axe de rotation du pneumatique. Le plan équatorial est le plan circonférentiel passant par le centre ou sommet de la bande de roulement et donc dans la partie centrale de la bande de roulement.

Un plan radial ou méridien contient l'axe de rotation du pneumatique.

La direction radiale est une direction coupant l'axe de rotation du pneumatique et perpendiculaire à celui-ci. La direction radiale est l'intersection entre un plan circonférentiel et un plan radial.

Les essais réalisés avec un pneumatique ainsi réalisé selon l'invention et monté sur la roue d'une motocyclette ont effectivement mis en évidence des performances en termes d'adhérence plus importantes que celles d'un pneumatique comportant des incisions de longueurs plus importantes.

Les inventeurs ont mis en évidence que la forme complexe d'un pneumatique de motocyclette et plus particulièrement sa courbure très prononcée entraîne un phénomène de double flexion importante centrée sur le bord de l'aire de contact. En effet, on peut observer au bord de l'aire de contact une courbure à très petit rayon de courbure qui relie la surface sensiblement plane de l'aire de contact au profil du pneumatique dont la courbure selon la direction méridienne est importante. La présence de cette courbure à très petit rayon de courbure entraîne effectivement une double flexion d'une part au regard de la surface de l'aire de contact et d'autre part au regard de la courbure selon la direction méridienne du pneumatique. Ce phénomène de double flexions au bord de l'aire de contact semble limiter au moins localement l'engagement d'une paroi d'une incision dans l'autre paroi. Cette limitation de l'engament des parois de l'incision est nuisible aux propriétés d'adhérence et de passages de couples.

La combinaison de longueurs d'incisions inférieures à 1.2 fois la largeur de la surface de l'aire de contact avec au moins une incision qui présente au moins une extrémité aboutissant dans une découpe de la bande de roulement dont la largeur est supérieure à 2.5 mm semble favoriser l'engagement des parois des incisions et conduire à des propriétés d'adhérence supérieures.

Selon un mode de réalisation préféré de l'invention, la surface apparente des incisions est supérieure à la surface apparente des découpes de la bande de roulement dont la largeur est supérieure à 2.5 mm et la longueur comprise entre 2.5 et 10 mm.

Au sens de l'invention, la surface apparente d'une découpe est la surface du vide ou de la zone d'absence de matière délimitée par les parois de ladite découpe sur la surface de la bande de roulement. Elle est mesuré sur un pneumatique gonflé à la pression nominale et non chargé.

De préférence encore, la surface apparente de l'ensemble des découpes de la bande de roulement dont la largeur est supérieure à 2.5 mm et la longueur comprise entre 2.5 et 10 mm est inférieure à 75 % de la surface apparente de l'ensemble des incisions.

Selon un mode de réalisation préféré de l'invention, la longueur des incisions est inférieure à la largeur de la surface de l'aire de contact.

Selon l'invention, au moins une extrémité d'au moins une incision aboutit soit dans une rainure telle que décrite précédemment qui délimite les blocs de mélanges caoutchouteux formant la bande de roulement soit dans une découpe prévue spécifiquement à cet effet.

Une telle découpe spécifiquement prévue à cet effet est par exemple une découpe de profondeur sensiblement égale à celle de l'incision

Avantageusement encore selon l'invention, ces découpes spécifiquement prévues présentent une section de type ovale au niveau de la bande de roulement.

Selon d'autres réalisations, la section au niveau de la surface de la bande de roulement de ces découpes spécifiquement prévues peut être toute forme géométrique, telles que par exemple des polygones.

Avantageusement encore, chacune des découpes spécifiquement prévues et présentant une largeur supérieure à 2.5 mm présente une longueur comprise entre 2.5 et 10 mm, et de préférence encore inférieure à 5 mm. La longueur d'une partie est mesurée entre les deux extrémités d'incisions qu'elles relient ; elle est égale à la longueur du rectangle circonscrit à ladite partie tel que défini précédemment.

Selon une autre variante de réalisation de l'invention, les extrémités d'une incision dont la longueur est supérieure à 0.7 fois la largeur de la surface de l'aire de contact aboutissent dans une découpe de la bande de roulement dont la largeur est supérieure à 2.5 mm.

De telles découpes de la bande de roulement sont comme dans le cas de la première variante de réalisation de l'invention soit une rainure soit dans une découpe prévue spécifiquement à cet effet.

Une variante avantageuse de l'invention prévoit que la profondeur des incisions varie selon la direction axiale notamment pour tenir compte des vitesses d'usure différentes selon la direction axiale du pneumatique et pour obtenir des rigidités de la bande de roulement variables selon la direction axiale.

Selon un mode de réalisation avantageux de l'invention, au moins la surface de la bande de roulement est constituée d'un premier mélange polymérique s'étendant sur au moins une partie de la partie centrale et d'au moins un deuxième mélange polymérique présentant des propriétés physico-chimique différentes de celles dudit premier mélange polymérique et couvrant au moins une partie des parties axialement extérieures de la bande de roulement.

Une telle variante de l'invention autorise la réalisation d'une bande de roulement présentant par exemple des propriétés relatives à l'usure améliorées au centre de la bande de roulement et des propriétés relatives à l'adhérence améliorées sur les parties axialement extérieures.

Une telle variante de réalisation de l'invention propose notamment de faire coïncider une bande roulement présentant des propriétés relatives à l'usure améliorées avec la présence d'incisions permettant ainsi de conserver des propriétés d'adhérence satisfaisante avec des propriétés d'usure améliorées.

Selon un mode de réalisation avantageux de l'invention, afin de conférer des propriétés symétriques au pneumatique, la bande circonférentielle centrale est avantageusement centrée sur le plan équatorial. Selon d'autres modes de réalisations, destinés par exemple à des pneumatiques devant rouler sur un circuit comportant des virages essentiellement dans la même direction, la bande circonférentielle centrale peut ne pas être centrée sur le plan équatorial.

Des variantes avantageuses de l'invention peuvent prévoir la présence de cinq bandes circonférentielles ou plus pour former au moins la surface de la bande de roulement et ainsi conférer une évolution graduelle des propriétés de ladite bande de roulement depuis le plan équatorial vers les épaules. De même que précédemment, une telle réalisation peut être symétrique par rapport au plan équatorial ou non, la répartition des bandes différent soit par leur composition soit par leur répartition par rapport au plan équatorial.

Selon un mode de réalisation préféré de l'invention, le deuxième mélange polymérique est d'une composition différente de celle du premier mélange polymérique et de préférence encore, le deuxième mélange polymérique présente des propriétés d'adhérence supérieures à celles dudit premier mélange polymérique.

Selon d'autres modes de réalisations, des propriétés différentes peuvent être obtenues avec des mélanges identiques par des conditions de vulcanisation différentes.

Avantageusement encore, les épaisseurs radiales des premier et deuxième mélanges polymériques peuvent être différentes, de façon à optimiser axialement l'usure de la bande de roulement. Avantageusement encore les épaisseurs varient graduellement.

Selon un mode de réalisation préféré de l'invention, le deuxième mélange polymérique présente une dureté Shore A différente de celle du premier mélange polymérique.

La dureté Shore A des mélanges polymériques après cuisson est appréciée conformément à la norme ASTM D 2240-86.

Selon un mode de réalisation préféré de l'invention, les éléments de renforcement de la structure de renfort de type carcasse font avec la direction circonférentielle un angle compris entre 65° et 90°.

Selon une variante de l'invention, la structure de renforcement de sommet comporte au moins une couche d'éléments de renforcement formant des angles avec la direction circonférentielle compris entre 10 et 80°.

Selon cette variante, la structure de renforcement de sommet comporte avantageusement au moins deux couches d'éléments de renforcement, les éléments de renforcement formant entre eux des angles compris entre 20 et 160°, d'une couche à la suivante, et de préférence supérieurs à 40°.

Selon une réalisation préférée de l'invention, les éléments de renforcement des couches de travail sont en matériau textile.

Selon un autre mode de réalisation de l'invention, les éléments de renforcement des couches de travail sont en métal.

Dans une réalisation avantageuse de l'invention, notamment pour optimiser les rigidités de la structure de renforcement le long du méridien du pneumatique, et en particulier aux bords des couches de travail, les angles formés par les éléments de renforcement des couches de travail avec la direction longitudinale sont variables selon la direction transversale tels que lesdits angles sont supérieurs sur les bords axialement extérieurs des couches d'éléments de renforcement par rapport aux angles mesurés au niveau du plan équatorial du pneumatique.

Une réalisation de l'invention prévoit que le pneumatique est notamment constitué d'une structure de renforcement de sommet qui comporte au moins une couche d'éléments de renforcement circonférentiels ; selon l'invention, la couche d'éléments de renforcement circonférentiels est constituée d'au moins un élément de renforcement orienté selon un angle formé avec la direction longitudinale inférieur à 5°.

De préférence également, les éléments de renforcement de la couche d'éléments de renforcement circonférentiels sont métalliques et/ou textiles et/ou en verre. L'invention prévoit notamment l'utilisation d'éléments de renforcement de natures différentes dans une même couche d'éléments de renforcement circonférentiels.

De préférence encore, les éléments de renforcement de la couche d'éléments de renforcement circonférentiels présentent un module d'élasticité supérieur à 6000 N/mm².

Une variante de réalisation de l'invention prévoit avantageusement que les éléments de renforcement circonférentiels sont répartis selon la direction transversale avec un pas variable.

La variation du pas entre les éléments de renforcement circonférentiels se traduit par une variation du nombre d'éléments de renforcement circonférentiels par unité de longueur selon la direction transversale et en conséquence par une variation de la densité d'éléments de renforcement circonférentiels selon la direction transversale et donc par une variation de la rigidité circonférentielle selon la direction transversale.

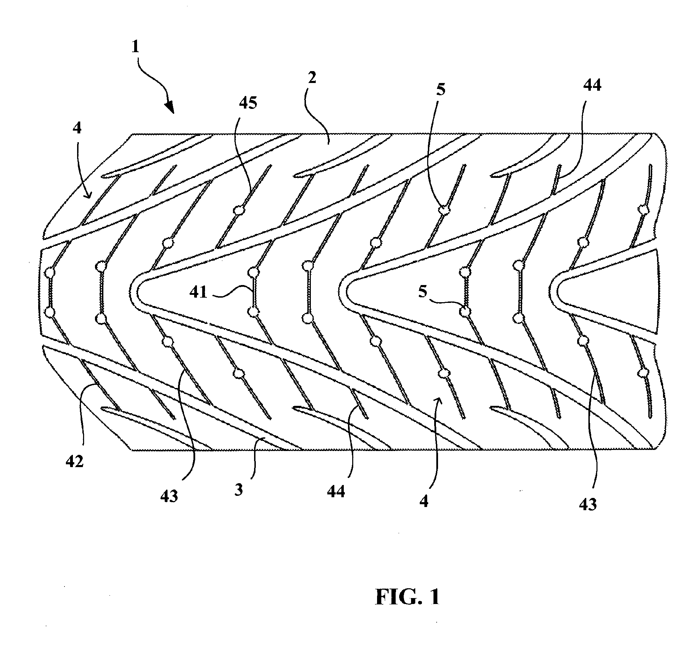

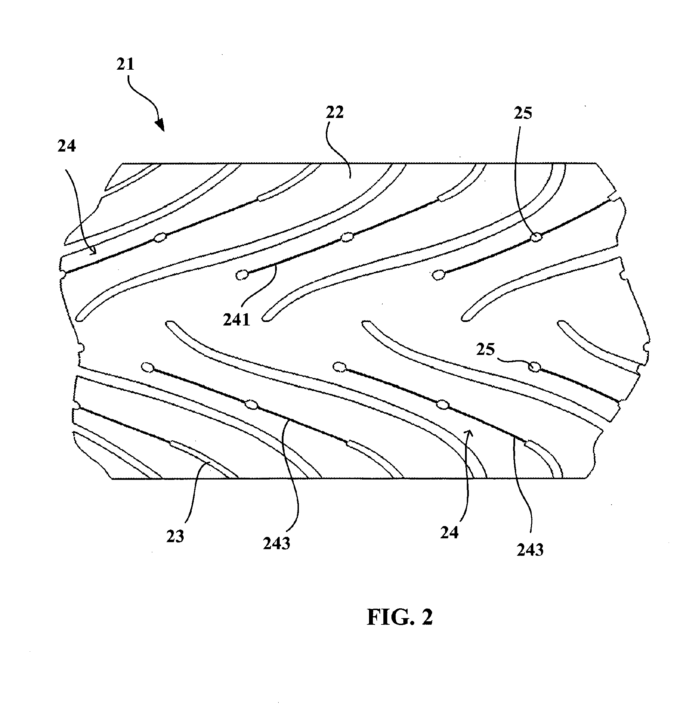

D'autres détails et caractéristiques avantageux de l'invention ressortiront ci-après de la description des exemples de réalisation de l'invention en référence aux figures 1 et 2 qui représentent :
- figure 1, une vue partielle du dessus d'un schéma d'un pneumatique selon un premier mode de réalisation de l'invention,
- figure 2, une vue partielle du dessus d'un schéma d'un pneumatique selon un deuxième mode de réalisation de l'invention.

Les figures 1 et 2 ne sont pas représentées à l'échelle pour en simplifier la compréhension.

La figure 1 représente une vue partielle en perspective d'un pneumatique 1, et plus précisément de la surface extérieure 2 de sa bande de roulement, destiné à équiper la roue avant de dimension 120/70 ZR 17 d'une motocyclette. Le pneumatique 1 présente une valeur de courbure supérieure à 0.15 et de préférence supérieure à 0.3. La valeur de courbure est définie par le rapport Ht/Wt, c'est-à-dire par le rapport de la hauteur de la bande de roulement sur la largeur maximale de la bande de roulement du pneumatique.

De manière non représentée sur les figures, le pneumatique 1 comprend une armature de carcasse constituée d'une couche comprenant des éléments de renforcement de type textile. La couche est constituée d'éléments de renforcement disposés radialement. Le positionnement radial des éléments de renforcement est défini par l'angle de pose desdits éléments de renforcement ; une disposition radiale correspond à un angle de pose desdits éléments par rapport à la direction longitudinale du pneumatique compris entre 65° et 90°.

L'armature de carcasse est ancrée de chaque côté du pneumatique 1 dans un bourrelet dont la base est destinée à être montée sur un siège de jante. Chaque bourrelet est prolongé radialement vers l'extérieur par un flanc, ledit flanc rejoignant radialement vers l'extérieur la bande de roulement.

Le pneumatique 1 comporte encore une armature de sommet constituée par exemple de deux couches d'éléments de renforcement faisant des angles avec la direction circonférentielle, lesdits éléments de renforcement étant croisés d'une couche à la suivante en faisant entre eux des angles par exemple de 50° dans la zone du plan équatorial, les éléments de renforcement de chacune des couches formant un angle par exemple égal à 25° avec la direction circonférentiel.

L'armature de sommet peut encore être constituée d'une couche d'éléments de renforcement circonférentiels en lieu et place des couches d'éléments de renforcement faisant des angles avec la direction circonférentielle ou bien combinée à celles-ci.

La bande de roulement 2 du pneumatique 1 comporte une sculpture constituée de rainures 3, la direction principale de celles-ci présentant un léger angle avec la direction radiale pour donner une orientation à ladite sculpture.

La bande de roulement 2 comporte encore des incisions 4 réparties sur la largeur de la bande de roulement.

Conformément à l'invention, la plupart des extrémités des incisions 4 débouchent soit sur des rainures 3 soit sur des découpes dont la largeur est supérieure à celle des incisions, ces découpes pouvant être qualifiées de puits 5. Dans le cas de la figure 1, ces puits 5 présentent une forme ovale sur la surface de la bande de roulement 2.

On trouve sur la surface de la bande de roulement des incisions 41 dont chacune des extrémités aboutit sur un puit 5. On trouve d'autres incisions 42 dont chacune des extrémités aboutit sur une rainure 3. On trouve des incisions 43 dont une extrémité aboutit sur un puit 5 et l'autre sur une rainure 3. On trouve encore des incisions 44 dont une extrémité aboutit sur une rainure 3 et dont l'autre extrémité est fermée par une masse caoutchouteuse de la bande de roulement et des incisions 45 dont une extrémité aboutit sur un puit 5 et dont l'autre extrémité est fermée par une masse caoutchouteuse de la bande de roulement.

Comme expliqué précédemment, les liaisons avec les rainures 3 ou avec les puits 5 sont avantageusement prévues pour interrompre les incisions et ainsi créer des incisions dont la longueur est inférieure à 1.2 fois la largeur de l'aire de contact.

Dans le cas du pneumatique 1, la largeur de l'aire de contact mesurée dans les conditions présentées précédemment, c'est-à-dire avec une charge de 1390 Newton et une pression de 2.5 bars, le pneumatique étant monté sur une jante 3.50MT17 est égale à 47 mm.

Les longueurs des incisions 41, 42 et 43 sont comprises entre 10 et 31 mm et donc inférieures à la largeur de la bande de roulement conformément à l'invention.

Les longueurs des incisions 44 et 45 sont comprises entre 17 et 24 mm et donc inférieures à 0.7 fois la largeur de la bande de roulement ; conformément à l'invention, des incisions présentant de telles longueurs peuvent avoir une extrémité non ouverte.

La surface apparente de l'ensemble des incisions 4 du pneumatique est égale à 5245 mm².

La surface apparente de l'ensemble des puits 5 du pneumatique est égale à 2000 mm².

Conformément à l'invention, la surface apparente de l'ensemble des incisions 4 est supérieure à la surface apparente de l'ensemble des puits 5.

La figure 2 représente une vue partielle du dessus d'un pneumatique 21 et plus précisément de la surface de la bande de roulement 22 dudit pneumatique 21 destiné à équiper une roue arrière d'une motocyclette. Il s'agit d'un pneumatique de dimension 180/55 ZR 17.

Les rainures 23 sont prolongées par une succession d'incisions 24 séparées par des puits 25.

Sur cette figure 2, on trouve des incisions 241 dont chacune des extrémités aboutit sur un puit 25 et des incisions 243 dont une extrémité aboutit sur un puit 25 et l'autre sur une rainure 3. Il n'existe pas sur cet exemple illustré sur la figure 2 d'incisions dont une extrémité est fermée par une masse caoutchouteuse de la bande de roulement.

Dans le cas du pneumatique 21, la largeur de l'aire de contact mesurée dans les conditions présentées précédemment, c'est-à-dire avec une charge de 2150 Newton et une pression de 2.5 bars, le pneumatique étant monté sur une jante 5.50MT17 est égale à 70 mm.

Les longueurs des incisions 241 et 243 sont sensiblement égales et comprises entre 54 et 56 mm et donc inférieures à la largeur de la bande de roulement conformément à l'invention.

La surface apparente de l'ensemble des incisions 24 du pneumatique est égale à 7194 mm².

La surface apparente de l'ensemble des puits 25 du pneumatique est égale à 4320 mm².

Conformément à l'invention, la surface apparente de l'ensemble des incisions 24 est supérieure à la surface apparente de l'ensemble des puits 25.

Des essais ont été réalisés avec un pneumatique de dimension 120/70 ZR 17 réalisé conformément à la figure 1.

Ce pneumatique a été comparé à deux pneumatiques de référence identiques au pneumatique de l'invention et comportant les mêmes rainures. Le premier pneumatique de référence R1 ne comporte aucune incision. Le pneumatique de référence R2 comporte les mêmes incisions que le pneumatique selon l'invention mais ne comporte aucun puit.

Les essais ont consisté à effectuer des roulages par trois pilotes sur un circuit arrosé. Les résultats sont la moyenne des temps réalisés par chaque pilote sur six tours, le temps du premier tour n'étant pas pris en compte.

La valeur 100 est attribuée au pneumatique de référence R1.

Le pneumatique de référence R2 se voit attribuer une note de 115 qui montre déjà l'intérêt de la présence d'incisions sur la bande de roulement.

Le pneumatique selon l'invention se voit attribuer une note de 120. Ce dernier résultat confirme que des incisions plus courtes notamment obtenues par la présence de puits et dont au moins une extrémité abouti dans une découpe de la bande de roulement de largeur plus importante améliore encore les performances d'adhérence.

## Revendications

1. Pneumatique (1, 21) pour véhicule motorisé à deux roues comportant une structure de renfort de type carcasse, formée d'éléments de renforcement, ancrée de chaque côté du pneumatique à un bourrelet dont la base est destinée à être montée sur un siège de jante, chaque bourrelet se prolongeant radialement vers l'extérieur par un flanc, les flancs rejoignant radialement vers l'extérieur une bande de roulement comportant des incisions (4, 24), formées de deux parois, la longueur des incisions étant inférieure à 1.2 fois la largeur de la surface de l'aire de contact et au moins une incision présentant au moins une extrémité qui aboutit dans une découpe (5, 25) de la bande de roulement dont la largeur est supérieure à 2.5 mm et la longueur comprise entre 2.5 et 10 mm,**caractérisé en ce que** la distance entre lesdites parois des incisions mesurée selon la normale à un plan tangent à l'une des parois est inférieure à 1.5 mm et ladite distance au niveau de la surface de la bande de roulement est au moins égale à ladite distance au niveau du fond des incisions.

2. Pneumatique (1, 21) selon la revendication 1, **caractérisé en ce que** la surface apparente des incisions (4, 24) est supérieure à la surface apparente des découpes (5, 25) de la bande de roulement dont la largeur est supérieure à 2.5 mm et la longueur comprise entre 2.5 et 10 mm.

3. Pneumatique (1, 21) selon la revendication 2, **caractérisé en ce que** la surface apparente des découpes (5, 25) de la bande de roulement dont la largeur est supérieure à 2.5 mm et la longueur comprise entre 2.5 et 10 mm est inférieure à 75 % de la surface apparente des incisions (4, 24).

4. Pneumatique (1, 21) selon la revendication 1 à 3, **caractérisé en ce que** la longueur des incisions (4, 24) est inférieure à la largeur de la surface de l'aire de contact.

5. Pneumatique (1, 21) selon l'une des revendications 1 à 4, **caractérisé en ce que** la longueur de ladite découpe (5, 25) de la bande de roulement dont la largeur est supérieure à 2.5 mm est inférieure à 5 mm.

6. Pneumatique (1, 21) selon l'une des revendications 1 à 5, **caractérisé en ce que** les extrémités d'une incision dont la longueur est supérieure à 0.7 fois la largeur de la surface de l'aire de contact aboutissent dans une découpe de la bande de roulement dont la largeur est supérieure à 2.5 mm.

7. Pneumatique (1, 21) selon l'une des revendications précédentes, la bande de roulement comportant au moins une partie centrale et deux parties axialement extérieures, **caractérisé en ce qu**'au moins la surface de la bande de roulement est constituée d'un premier mélange polymérique s'étendant sur au moins une partie de la partie centrale et d'au moins un deuxième mélange polymérique présentant des propriétés physico-chimique différentes de celles dudit premier mélange polymérique et couvrant au moins une partie des parties axialement extérieures de la bande de roulement.

8. Pneumatique (1, 21) selon l'une des revendications précédentes, **caractérisé en ce que** les éléments de renforcement de la structure de renfort de type carcasse font avec la direction circonférentielle un angle compris entre 65° et 90°.

9. Pneumatique (1, 21) selon l'une des revendications précédentes, **caractérisé en ce que** la structure de renforcement de sommet comporte au moins une couche d'éléments de renforcement, dite couche de travail, et **en ce que** les éléments de renforcement forment des angles avec la direction circonférentielle compris entre 10 et 80°.

10. Pneumatique (1, 21) selon la revendication 9, **caractérisé en ce que** les angles formés par les éléments de renforcement de ladite au moins une couche de travail avec la direction longitudinale sont variables selon la direction transversale.

11. Pneumatique (1, 21) selon l'une des revendications précédentes, **caractérisé en ce que** la structure de renforcement de sommet comporte au moins une couche d'éléments de renforcement circonférentiels.

12. Pneumatique (1, 21) selon la revendication 11, **caractérisé en ce que** les éléments de renforcement circonférentiels sont répartis selon la direction transversale avec un pas variable.

## Patentansprüche

1. Reifen (1, 21) für ein zweirädriges Kraftfahrzeug, der eine Verstärkungsstruktur von der Art einer Karkasse aufweist, die von Verstärkungselementen gebildet wird und auf jeder Seite des Reifens an einem Wulst verankert ist, dessen Basis dazu bestimmt ist, auf einem Felgensitz angebracht zu werden, wobei sich jeder Wulst radial nach außen durch eine Seitenwand verlängert, wobei sich die Seitenwände radial nach außen mit einem Laufstreifen vereinigen, der Einschnitte (4, 24) aufweist, die von zwei Wänden gebildet werden, wobei die Länge der Einschnitte kleiner als das 1,2-fache der Breite der Oberfläche der Aufstandsfläche ist und mindestens ein Einschnitt mindestens ein Ende aufweist, welches in einem Ausschnitt (5, 25) des Laufstreifens endet, dessen Breite größer als 2,5 mm ist und dessen Länge zwischen 2,5 und 10 mm liegt, **dadurch gekennzeichnet, dass** der Abstand zwischen den Wänden der Einschnitte, gemessen entlang der Normalen zu einer Ebene, die zu einer der Wände tangential ist, kleiner als 1,5 mm ist und dieser Abstand an der Oberfläche des Laufstreifens mindestens gleich diesem Abstand am Boden der Einschnitte ist.

2. Reifen (1, 21) nach Anspruch 1, **dadurch gekennzeichnet, dass** die sichtbare Fläche der Einschnitte (4, 24) größer als die sichtbare Fläche der Ausschnitte (5, 25) des Laufstreifens ist, deren Breite größer als 2,5 mm ist und deren Länge zwischen 2,5 und 10 mm liegt.

3. Reifen (1, 21) nach Anspruch 2, **dadurch gekennzeichnet, dass** die sichtbare Fläche der Ausschnitte (5, 25) des Laufstreifens, deren Breite größer als 2,5 mm ist und deren Länge zwischen 2,5 und 10 mm liegt, kleiner als 75 % der sichtbaren Fläche der Einschnitte (4, 24) ist.

4. Reifen (1, 21) nach Anspruch 1 bis 3, **dadurch gekennzeichnet, dass** die Länge der Einschnitte (4, 24) kleiner als die Breite der Oberfläche der Aufstandsfläche ist.

5. Reifen (1, 21) nach einem der Ansprüche 1 bis 4, **dadurch gekennzeichnet, dass** die Länge des Ausschnitts (5, 25) des Laufstreifens, dessen Breite größer als 2,5 mm ist, kleiner als 5 mm ist.

6. Reifen (1, 21) nach einem der Ansprüche 1 bis 5, **dadurch gekennzeichnet, dass** die Enden eines Einschnitts, dessen Länge größer als das 0,7-fache der Breite der Oberfläche der Aufstandsfläche ist, in einem Ausschnitt des Laufstreifens enden, dessen Breite größer als 2,5 mm ist.

7. Reifen (1, 21) nach einem der vorhergehenden Ansprüche, wobei der Laufstreifen mindestens einen mittleren Teil und zwei axial äußere Teile aufweist, **dadurch gekennzeichnet, dass** mindestens die Oberfläche des Laufstreifens aus einer ersten Polymermischung, die sich auf wenigstens einem Teil des mittleren Teils erstreckt, und aus mindestens einer zweiten Polymermischung, die physikalisch-chemische Eigenschaften aufweist, die von denjenigen der ersten Polymermischung verschieden sind, und die wenigstens einen Teil der axial äußeren Teile des Laufstreifens bedeckt, besteht.

8. Reifen (1, 21) nach einem der vorhergehenden Ansprüche, **dadurch gekennzeichnet, dass** die Verstärkungselemente der Verstärkungsstruktur von der Art einer Karkasse mit der Umfangsrichtung einen Winkel bilden, der zwischen 65° und 90° liegt.

9. Reifen (1, 21) nach einem der vorhergehenden Ansprüche, **dadurch gekennzeichnet, dass** die Scheitelverstärkungsstruktur mindestens eine Lage von Verstärkungselementen, die Arbeitslage genannt wird, aufweist, und **dadurch, dass** die Verstärkungselemente mit der Umfangsrichtung Winkel bilden, die zwischen 10° und 80° liegen.

10. Reifen (1, 21) nach Anspruch 9, **dadurch gekennzeichnet, dass** die Winkel, die von den Verstärkungselementen der mindestens einen Arbeitslage mit der Längsrichtung gebildet werden, entlang der Querrichtung variabel sind.

11. Reifen (1, 21) nach einem der vorhergehenden Ansprüche, **dadurch gekennzeichnet, dass** die Scheitelverstärkungsstruktur mindestens eine Lage von in Umfangsrichtung ausgerichteten Verstärkungselementen aufweist.

12. Reifen (1, 21) nach Anspruch 11, **dadurch gekennzeichnet, dass** die in Umfangsrichtung ausgerichteten Verstärkungselemente entlang der Querrichtung mit einem variablen Abstand verteilt sind.

## Claims

1. Tyre (1, 21) for a motorized two-wheeled vehicle comprising a reinforcing structure of the carcass type, made up of reinforcing elements, anchored on each side of the tyre to a bead the base of which is intended to be mounted on a rim seat, each bead being extended radially outwards by a sidewall, the sidewalls radially towards the outside joining to a tread comprising incisions (4, 24), formed of two walls, the length of the incisions being less than 1.2 times the width of the surface of the contact patch and at least one incision having at least one end which ends in a cut (5, 25) in the tread the width of which is greater than 2.5 mm and the length of which is between 2.5 and 10 mm, **characterized in that** the distance between the walls of the incisions measured along the normal to a plane tangential to one of the walls is less than 1.5 mm and the said distance on the surface of the tread is at least equal to the said distance at the bottom of the incisions,.

2. Tyre (1, 21) according to Claim 1, **characterized in that** the apparent area of the incisions (4, 24) is greater than the apparent area of the cuts (5, 25) in the tread the width of which is greater than 2.5 mm and the length of which is between 2.5 and 10 mm.

3. Tyre (1, 21) according to Claim 2, **characterized in that** the apparent area of the cuts (5, 25) in the tread of which the width is greater than 2.5 mm and of which the length is between 2.5 and 10 mm is less than 75% of the apparent area of the incisions (4, 24).

4. Tyre (1, 21) according to one of Claims 1 to 3, **characterized in that** the length of the incisions (4, 24) is less than the width of the area of the contact patch.

5. Tyre (1, 21) according to one of Claims 1 to 4, **characterized in that** the length of the said cut (5, 25) in the tread of which the width is greater than 2.5 mm is less than 5mm.

6. Tyre (1, 21) according to one of Claims 1 to 5, **characterized in that** the ends of an incision of which the length is greater than 0.7 times the width of the area of the contact patch end in a cut in the tread of which the width is greater than 2.5 mm.

7. Tyre (1, 21) according to one of the preceding claims, the tread comprising at least one central part and two axially external parts, **characterized in that** at least the surface of the tread consists of a first polymer compound extending over at least part of the central part and of at least one second polymer compound having physico-chemical properties different from those of the said first polymer compound and covering at least part of the axially external parts of the tread.

8. Tyre (1, 21) according to one of the preceding claims, **characterized in that** the reinforcing elements of the carcass-type reinforcing structure make with the circumferential direction an angle of between 65 and 90°.

9. Tyre (1, 21) according to one of the preceding claims, **characterized in that** the crown reinforcing structure comprises at least one layer of reinforcing elements , known as the working layer, and **in that** the reinforcing elements make with the circumferential direction angles of between 10 and 80°.

10. Tyre (1, 21) according to Claim 9, **characterized in that** the angles made by the reinforcing elements of the said at least one working layer with the longitudinal direction can vary in the transverse direction.

11. Tyre (1, 21) according to one of the preceding claims, **characterized in that** the crown reinforcing structure comprises at least one layer of circumferential reinforcing elements.

12. Tyre (1, 21) according to Claim 11, **characterized in that** the circumferential reinforcing elements are distributed in the transverse direction at a variable pitch.
